# EUROPEAN PATENT APPLICATION

(11) **EP 4 841 435 A1**
(43) Date of publication of application: **18.11.2026**
(21) Application number: 24916604.2
(22) Date of filing: 29.11.2024
(51) Int. Cl.: G06F 9/451

(54) **ELEMENT PROCESSING METHOD AND APPARATUS, ELECTRONIC DEVICE, AND STORAGE MEDIUM**

(30) Priority: 10.01.2024 CN 202410040080
(71) Applicant: Beijing Zitiao Network Technology Co., Ltd., Beijing 100190 (CN)
(72) Inventor: LIAO, Yunhao, Beijing 100028 (CN)
(74) Representative: Grünecker Patent- und Rechtsanwälte PartG mbB
(86) International application number: PCT/CN2024/135844
(87) International publication number: WO 2025/148556

(57) **Abstract**

Embodiments of the present disclosure provide an element processing method and apparatus, an electronic device, and a storage medium. The method includes: acquiring to-be-added elements in response to an element adding request, and adding the elements to an element queue one by one according to a preset adding order; taking out the elements from the element queue in sequence according to the preset adding order, determining target sub-elements corresponding to the taken-out elements, and writing the target sub-elements into a data layer; and displaying the target sub-elements written into the data layer on a screen.

## Description

### CROSS-REFERENCE TO RELATED APPLICATION(S)

The present application claims priority to Chinese Patent Application No. 202410040080.7, filed on January 10, 2024, and entitled "ELEMENT PROCESSING METHOD, APPARATUS, ELECTRONIC DEVICE, AND STORAGE MEDIUM", which is incorporated herein by reference in its entirety.

### FIELD

Embodiments of the present disclosure relate to computer application technologies, and in particular, to an element processing method and apparatus, an electronic device, and a storage medium.

### BACKGROUND

With the continuous development of computer vision technology, more and more elements are displayed in a visual manner. Display effects of the elements are also more and more diversified.

In order to enrich the display effect of the element, in the related art, a manner of enabling the display mode of the element is usually adopted, for example, changing a display style of the element, changing a display theme of the element, or adding animation parameters to the element.

However, in the related art, the display mode of the element itself is often limited to enlargement or reduction display, and the display mode is relatively monotonous. Especially in a scenario where multiple elements are displayed on a screen at the same time, due to relatively limited display space and display time of the screen, the display effect of the multiple elements is poor.

### SUMMARY

Embodiments of the present disclosure provide an element processing method and apparatus, an electronic device, and a storage medium.

In a first aspect, an embodiment of the present disclosure provides an element processing method, and the method includes: acquiring elements to-be-added in response to an element adding request, and adding the elements to an element queue one by one according to a preset adding order; taking out the elements from the element queue in sequence according to the preset adding order, determining target sub-elements corresponding to the taken-out elements, and writing the target sub-elements into a data layer; and displaying the target sub-elements written into the data layer on a screen.

In a second aspect, an embodiment of the present disclosure further provides an element processing apparatus, and the apparatus includes: an element adding module configured to acquire elements to-be-added in response to an element adding request, and add the elements to an element queue one by one according to a preset adding order; a sub-element extraction module configured to take out the elements from the element queue in sequence according to the preset adding order, determine target sub-elements corresponding to the taken-out elements, and write the target sub-elements into a data layer; and a screen display module, configured to display the target sub-elements written into the data layer on a screen.

In a third aspect, an embodiment of the present disclosure further provides an electronic device, and the electronic device includes: one or more processors; and a storage apparatus, configured to store one or more programs, wherein when the one or more programs are executed by the one or more processors, the one or more processors are caused to implement the element processing method according to any one of the embodiments of the present disclosure.

In a fourth aspect, an embodiment of the present disclosure further provides a storage medium including computer-executable instructions, and when the computer-executable instructions are executed by a computer processor, the element processing method according to any one of the embodiments of the present disclosure is performed.

### BRIEF DESCRIPTION OF THE DRAWINGS

The above and other features, advantages, and aspects of the embodiments of the present disclosure will become more apparent in combination with the drawings and with reference to the following specific embodiments. Throughout the drawings, the same or similar reference numbers refer to the same or similar elements. It should be understood that the drawings are schematic and that the components and elements are not necessarily drawn to scale.
Fig. 1A is a schematic flowchart of an element processing method according to an embodiment of the present disclosure;
Fig. 1B is a schematic flowchart of element addition which may be used in the element processing method according to an embodiment of the present disclosure;
Fig. 2A is a schematic flowchart of another element processing method according to an embodiment of the present disclosure;
Fig. 2B is a schematic flowchart of an optional example of another element processing method according to an embodiment of the present disclosure;
Fig. 2C is a schematic flowchart of element rendering which may be used in the element processing method according to an embodiment of the present disclosure;
Fig. 3A is a schematic structural diagram of another element processing apparatus according to an embodiment of the present disclosure;
Fig. 3B is a schematic flowchart of element deletion which may be used in an embodiment of the present disclosure;
Fig. 4 is a schematic structural diagram of an element processing apparatus according to an embodiment of the present disclosure; and
Fig. 5 is a schematic structural diagram of an electronic device according to an embodiment of the present disclosure.

### DETAILED DESCRIPTION

The embodiments of the present disclosure will be described in more detail below with reference to the drawings. Although some embodiments of the present disclosure are shown in the drawings, it should be understood that the present disclosure may be implemented in various forms and should not be construed as limited to the embodiments set forth herein; on the contrary, these embodiments are provided for a more thorough and complete understanding of the present disclosure. It should be understood that the drawings and embodiments of the present disclosure are only for exemplary purposes, and are not intended to limit the protection scope of the present disclosure.

It should be understood that the various steps described in the method implementations of the present disclosure may be performed in different orders, and/or performed in parallel. Furthermore, the method implementations may include additional steps and/or omit the execution of the illustrated steps. The scope of the present disclosure is not limited in this regard.

As used herein, the term "include/comprise" and variations thereof are open-ended inclusions, that is, "include/comprise but not limited to". The term "based on" is "at least partially based on". The term "one embodiment" means "at least one embodiment"; the term "another embodiment" means "at least one other embodiment"; the term "some embodiments" means "at least some embodiments". Relevant definitions of other terms will be given in the following description.

It should be noted that the concepts such as "first" and "second" mentioned in the present disclosure are only used to distinguish different apparatuses, modules or units, and are not used to limit the order or interdependence of the functions performed by these apparatuses, modules or units.

It should be noted that the modifiers of "one" and "multiple" mentioned in the present disclosure are illustrative and not restrictive, and those skilled in the art should understand that unless otherwise clearly indicated in the context, they should be understood as "one or multiple".

The names of messages or information exchanged between multiple apparatuses in the implementations of the present disclosure are only used for illustrative purposes, and are not used to limit the scope of these messages or information.

It may be understood that before using the technical solutions disclosed in the embodiments of the present disclosure, the user shall be informed of the type, range of use, use scenarios, etc. of personal information involved in the present disclosure and the authorization of the user shall be obtained in an appropriate manner in accordance with relevant laws and regulations.

For example, in response to receiving an active request from a user, prompt information is sent to the user to clearly prompt the user that the requested operation will require access to and use of the user's personal information. In this way, the user may independently choose, based on the prompt information, whether to provide the personal information to software or hardware, such as an electronic device, an application, a server, or a storage medium, that performs the operations of the technical solutions of the present disclosure.

As an optional but non-limiting implementation, in response to receiving the active request from the user, the prompt information may be sent to the user in the form of, for example, a pop-up window, in which the prompt information may be presented in text. In addition, the pop-up window may also include a selection control for the user to select whether to "agree" or "disagree" to provide the personal information to the electronic device.

It may be understood that the above process of notifying and obtaining user authorization is only illustrative, and does not limit the implementations of the present disclosure, and other methods that satisfy the relevant laws and regulations may also be applied to the implementations of the present disclosure.

It may be understood that the data involved in this technical solution (including but not limited to the data itself, acquisition or use of the data) shall comply with the requirements of corresponding laws, regulations and related provisions.

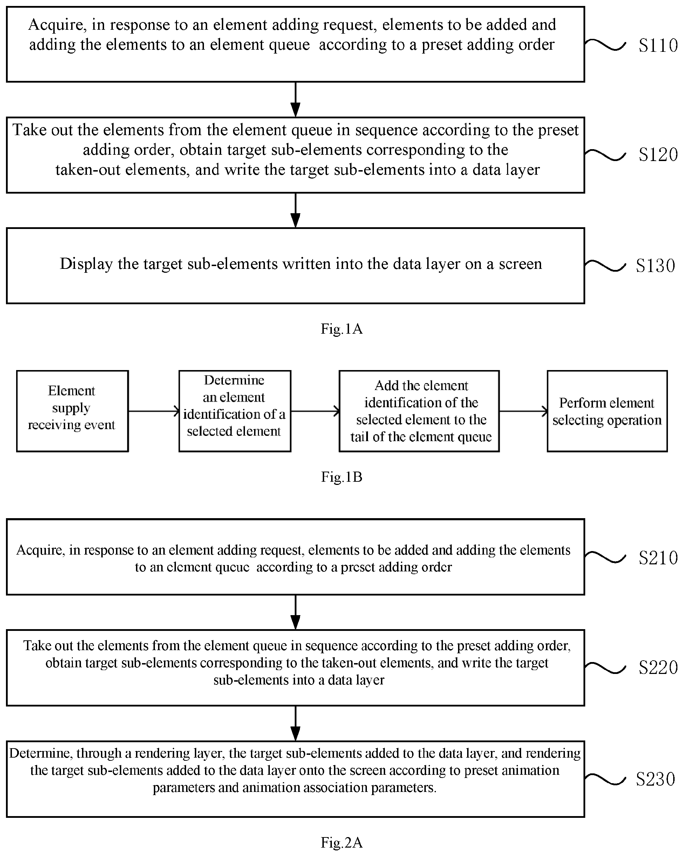

Fig. 1A is a schematic flowchart of an element processing method according to an embodiment of the present disclosure. The embodiment of the present disclosure is applicable to a case of displaying an element on a screen, and is particularly applicable to a case of displaying multiple elements on a screen. The method may be performed by an element processing apparatus, which may be implemented in the form of software and/or hardware, optionally, implemented by an electronic device, which may be a mobile terminal, a PC, a server, or the like. As shown in Fig. 1A, the method in this embodiment may specifically include the following steps.

S110: acquiring to-be-added elements in response to an element adding request, and adding the elements to an element queue one by one according to a preset adding order.

The element adding request may be understood as a request to initiate display of sub-elements corresponding to the element on a screen. Specifically, the element adding request may carry the to-be-added element and/or an element identification corresponding to the element. The element identification may be an identification used to distinguish the element from other elements, for example, may specifically be a Universally Unique Identifier (UUID). The element adding request may be generated based on an element adding operation. Exemplarily, the element addition operation may be based on at least one of an element uploading operation, an element importing operation, an element capturing operation, and the like. The element adding request may also be generated based on a preset trigger event. Exemplarily, the preset trigger event may be a preset time trigger event and/or a preset content trigger event, for example, receiving an element of a preset type sent by a target end. The element may be understood as an object to be processed. There may be one or more to-be-added elements. The element may be various, for example, may be media content, and specifically may be one or more of an image, a text, an audio, and a video. The preset adding order may be understood as a preset sequence of adding elements to the element queue, or a processing sequence of the elements. Exemplarily, the element adding order may be determined based on an adding time of the elements and/or a preset priority of the elements.

In the embodiment of the present disclosure, the element queue is used to add an element identification corresponding to an element for which a target sub-element is to be generated, and a processing sequence of the elements is indicated by an arrangement sequence of the element identifications in the element queue. Because when multiple elements generate sub-elements, there will be a certain delay in time for different elements, a queue of elements for processing is set up to quickly add and delete the elements for processing. Moreover, when an element generates a sub-element, there is a certain time delay for the processing of other elements, therefore, it is necessary to continuously record the elements for processing through the element queue. Briefly speaking, the element queue is used to maintain a sequence of the current elements for processing. Moreover, the arrangement position of an element identification in the sequence determines the processing sequence of the corresponding element.

Optionally, adding the elements to the element queue one by one according to the preset adding order includes: for each of the elements, determining an element processing state corresponding to the element, determining, based on the element processing state, elements to be added to the element queue, and adding the elements to the element queue one by one according to the preset adding order. The element processing state includes one or more of the following states: being present in the element queue, being in the process of determining a target sub-element, and having been displayed on the screen.

Exemplarily, determining, based on the element processing state, the elements to be added to the element queue, and adding the elements to the element queue one by one according to the preset adding order includes at least one of the following operations: in a case where the element processing state is being in the process of determining a target sub-element or having been displayed on the screen, continuing to perform the operation of determining one or more target sub-elements corresponding to the taken-out element, and ignoring the element adding request of this element; and in a case where the element processing state is being present in the element queue, deleting an element identification of the element from the element queue, and adding the element identification to a tail of the element queue. With the above technical solution, it is possible to effectively prevent the newly added element from being repeatedly processed for screen display, thereby avoiding performance waste.

Fig. 1B is a schematic flowchart of element addition which may be used in the element processing method according to an embodiment of the present disclosure. Exemplarily, as shown in Fig. 1B, when a new to-be-added element is added, the performed operation is mainly maintenance of a data structure associated with the element queue, which does not interfere with the operation of determining, by a sub-element rendering core, the target sub-element corresponding to the taken-out element, and the rendering layer will not be directly notified to perform screen rendering. Specifically, in a case where a receiving event of element supply is received, that is, in a case where one or more to-be-added elements are acquired, the element identification of the element is acquired, and then, in the order in which the elements are added, whether the element is being processed by the sub-element rendering core is determined one by one based on the element identification of the element, that is, whether the operation of determining the target sub-element corresponding to the taken-out element is being performed. If the element is currently being processed, this element adding event is ignored. If the element is not being processed by the element rendering core but exists in the element queue, all items of element identifications that are the same as the element identification in the element queue are deleted, and then the element identification is added to the tail of the element queue. If the element is neither being processed by the element rendering core nor its element identification being present the element queue, the element identification of the element is directly added to the tail of the element queue. The element rendering core is responsible for processing the to-be-added element into the target sub-element.

S120: taking out the elements from the element queue in sequence according to the preset adding order, determining target sub-elements corresponding to the taken-out elements, and writing the target sub-elements into a data layer.

In the embodiment of the present disclosure, the target sub-element corresponding to the element may be information associated with the element. Exemplarily, the target sub-element may be used to indicate at least part of content in the element and/or to indicate description information of the element. Exemplarily, the target sub-element may be an object of a target type in the element, for example, in a person image, the target sub-element may be a face or a hand in the image; in a landscape image, the target sub-element may be a building or a plant of a preset type. The target sub-element may also be key information in the element and other information associated with the key information, for example, in a text-type element, the target sub-element may be a keyword of the text and a description word similar to the keyword. The data layer is used to maintain (record and store) rendering data of the target sub-elements displayed on the screen.

As mentioned above, in order to save performance, the maximum number of the target sub-elements displayed on the screen is set. The maximum number of elements displayed on the screen is the same as the number of storage positions. Therefore, when taking out the elements from the element queue in sequence according to the preset adding order, it may first be detected whether there is an unoccupied storage position in the data layer. Specifically, in a case where there is an unoccupied storage position in the data layer, the element for processing is taken out from the element queue according to the preset adding order. If there is no unoccupied storage position in the data layer, that is, all the storage positions have been occupied, it means that the number of the target sub-elements displayed on the screen has reached the upper limit, and at this time, the sub-elements of the subsequent elements can no longer be rendered on the screen. Then, the element for processing may not be taken out from the element queue for the time being to avoid performance loss.

Optionally, the data layer includes a preset number of storage positions. In the embodiment of the present disclosure, the number of storage positions in the data layer is the same as the maximum number of target sub-elements supported to be displayed on the screen at the same time. That is, the preset number may be a preset maximum number of target sub-elements supported to be displayed on the screen at the same time. Considering that the memory space of the electronic device that executes the element processing method is limited, in order to optimize the memory, all data to be displayed on the screen may share a memory space at the bottom layer. For example, the data layer may support at most k sub-elements to be rendered on the screen at the same time, then only k storage positions may be allocated in the memory of the bottom layer to store the target sub-elements displayed on the screen. Further, each storage position in the data layer is set with a key and a position identification. The reason for setting the position identification is that, since k storage positions are allocated, and then when the target sub-elements are added and deleted, the sequence of the target sub-elements stored in the array corresponding to the data layer may be disordered, in order to ensure that the rendering sequence on the screen is correct, the position identification is set for marking.

Exemplarily, the key is at least used to record the element identification of the element corresponding to each target sub-element rendered on the screen or stored in the data layer. Further, the key may also be used to record the animation association parameter of the target sub-element.

Optionally, writing the target sub-elements into the data layer includes: writing the target sub-elements into the storage positions one by one based on a flag bit corresponding to each of the target sub-elements, where each target sub-element is written into one storage position. The flag bit may be used to indicate whether the storage position is occupied. Specifically, different characters may be preset for the flag bit to represent different occupancy states.

Specifically, when there is a new sub-element to be added to the data layer, the following operations may be performed: traversing the storage positions in the data layer, and determining the occupancy state of the storage positions based on the flag bit corresponding to each of the target sub-elements in the data layer; when it is detected that the character of the flag bit indicates that the target position is in an unoccupied state, writing a new target sub-element into the target position corresponding to the flag bit; and after all the storage positions in the data layer are filled up, or after all new target sub-elements are filled in, stopping the element processing and the writing of the target sub-elements. With the technical solution, it may be effectively ensured that the target sub-element is successfully written into the data layer.

Specifically, determining the target sub-element corresponding to the taken-out element includes: scaling the taken-out element proportionally to a preset size according to a preset proportion, and extracting an initial sub-element in the scaled element; in a case where the initial sub-element satisfies a preset filtering condition, taking the initial sub-element as a sub-element for extraction; and acquiring a projection transformation matrix used when extracting the sub-element, and extracting the target sub-element from the element by using the projection transformation matrix.

The projection transformation matrix may specifically include a Model matrix, a View matrix, and a Projection matrix. The Model matrix is used to define a position, a rotation, and a scaling of a model in a model coordinate system. The View matrix is used to define a position and a direction of an observer in a world coordinate system. The Projection matrix is used to define a type and a range of a projection in a projection coordinate system. The element may be transformed to a normalized space through the projection transformation matrix. Because it is scaled proportionally, and the description of the Model matrix, the View matrix, and the Projection matrix is the description in the normalized space (all are [-1, 1]) , there is no need to consider the absolute values of the width and height of the element, and only the aspect ratio of the element needs to be considered.

In the embodiment of the present disclosure, because the element for processing may often be larger in size, the problem of operation space occupancy and processing efficiency is solved by scaling the element. Taking the element for processing being a picture as an example, it may first be scaled onto a texture whose longest side is a preset value in a form of scaling according to the alignment of the longest side, and then the element is processed by a preset algorithm of an image processor to obtain a plurality of sub-elements, and then these sub-elements are screened according to a preset filtering condition. And the projection transformation matrix used for processing the scaled element is recorded. Since the element is scaled proportionally according to the preset proportion, the projection transformation matrix may be reused to extract the target sub-element in the original element. By extracting the target sub-element from the element by using the projection transformation matrix, the loss of the obtained target sub-element may be reduced, and the operation efficiency may be improved, while ensuring the processing result of the target sub-element, thereby ensuring the effect of displaying on the screen.

In the embodiment of the present disclosure, when the total number of the target sub-elements to be displayed on the screen changes, the display information of the target sub-elements on the screen may be updated in a preset manner. Optionally, after the target sub-element is written into the data layer, it means that the target sub-element that needs to be displayed on the screen is increased, at this time, for the target sub-element that has been displayed on the screen, the display information of the target sub-element on the screen may be updated in the preset manner, so as to increase the display on the screen of the newly added target sub-element. Alternatively, after the target sub-element corresponding to the element is deleted from the data layer, it means that the target sub-element displayed on the screen is reduced, at this time, for the target sub-element that has been displayed on the screen, the display information of the target sub-element on the screen may also be updated in the preset manner.

The display information may be understood as information for displaying the target sub-element on the screen. Exemplarily, the display information may specifically include a display position and/or a display size. The preset manner may be a preset display manner on the screen of one or more target sub-elements. Exemplarily, when multiple target sub-elements are displayed on the screen, the display information of different target sub-elements on the screen may be the same or different.

For example, the target sub-elements having been displayed on the screen are sub-element 1, sub-element 2, sub-element 3, sub-element 4, sub-element 5, and sub-element 6, respectively. In the process of canceling the display of sub-element 2 and sub-element 3 on the screen or after canceling the display of sub-element 2 and sub-element 3 on the screen, sub-element 4, sub-element 5, and sub-element 6 may be sequentially shifted, sub-element 4 and sub-element 5 are moved to the display positions of sub-element 2 and sub-element 3 for display, and sub-element 6 is moved to the display position of sub-element 4 for display. Alternatively, sub-element 1, sub-element 4, sub-element 5, and sub-element 6 are moved to the middle four display positions for display. Still alternatively, the display information of one or more target sub-elements in sub-element 1, sub-element 4, sub-element 5, and sub-element 6 is adjusted according to a preset layout corresponding to the number of the target sub-elements displayed on the screen. The display information includes

Optionally, after writing the target sub-elements into the data layer, the method further includes: in a case where there are multiple target sub-elements, updating a rendering sequence corresponding to the target sub-elements according to a writing sequence of the target sub-elements in the data layer. Specifically, the rendering sequence corresponding to the target sub-elements is updated according to the processing sequence of the storage positions written in the data layer by the target sub-elements. Each storage position may be associated with a rendering entity of an engine. In the embodiment of the present disclosure, the processing sequence of the target sub-elements written in each storage position may be determined according to the occupancy state (occupied or unoccupied) of each storage position in the data layer and the occupancy time, and then the rendering sequence of the target position may be updated according to the processing sequence.

For example, the data layer has 5 storage positions, and the position identifications of each storage position from front to back are identified by 0-4 respectively, the flag bit of the occupied storage position is True, and the flag bit of the unoccupied storage position is False, and the rendering sequence from front to back is represented by 1-5 respectively. In the initial state, the processing sequence of the storage positions is 0, 1, 2, 3, 4, 5 in turn, the flag bits are all False, and the corresponding rendering sequence is 0, 1, 2, 3, 4, 5. It is assumed that the target sub-elements are written into the storage positions 0-3 in turn. At this time, the flag bits of the storage positions 0, 1, 2, 3, 4, 5 are True, True, True, True, False, False, respectively. In the state that the target sub-elements in the storage positions 1 and 2 are deleted, the processing sequence of the storage positions is adjusted, and the adjusted processing sequence is 0, 3, 4, 5, 1, 2 in turn. At this time, the rendering sequence is updated according to the processing sequence. After the updating, the rendering sequences corresponding to the storage positions 0, 3, 4, 5, 1, 2 are 0, 1, 2, 3, 4, 5, respectively. The larger the rendering sequence, the later the rendering time. The advantage of such setting is that it can ensure that the target sub-element first displayed on the screen is displayed on the top layer.

In simple terms, the rendering entity of the engine corresponding to each storage position in the data layer is uniquely fixed. However, the above deletion operation of the target sub-element may cause the rendering sequence to be misaligned, for example, in the above example: 0, 1, 2, 3, 4, 5-> 0, 3, 4, 5, 1, 2, we need to update the render order attribute of the entities 0, 3, 4, 5, 1, 2 to 0, 1, 2, 3, 4, 5.

S130: displaying the target sub-elements written into the data layer on a screen.

In the embodiment of the present disclosure, the target sub-elements written into the data layer may be displayed on the screen through the data layer, so as to realize the real-time update of the target sub-elements on the screen. In order to avoid the flicker of the target sub-elements and realize the smooth transition of the display effect, the target sub-elements written into the data layer may be rendered on the screen through the rendering layer.

In the technical solution of the embodiment of the present disclosure, first, the to-be-added elements are acquired in response to the element adding request, which supports the custom addition of elements, thereby realizing the dynamic processing of the elements; then, the elements are added to the element queue one by one according to the preset adding order, and then the elements are taken out from the element queue in sequence according to the preset adding order, that is, the to-be-added elements may be processed according to the preset adding order through the element queue, to sequentially obtain the target sub-elements corresponding to the elements; finally, the target sub-elements are written into the data layer, and then the target sub-elements written into the data layer are displayed on the screen, which effectively solves the technical problems of the limited display space and time and the monotonous display mode of elements in the related art, and may effectively ensure the data stability of the target sub-elements, thereby ensuring the display effect of the target sub-elements on the screen.

Fig. 2A is a schematic flowchart of another element processing method according to an embodiment of the present disclosure. On the basis of the above embodiments, the technical solution of this embodiment details the manner in which the sub-elements are displayed on the screen. Optionally, displaying the target sub-elements written into the data layer on a screen includes: determining, by a rendering layer, the target sub-elements added to the data layer, and rendering the target sub-elements added to the data layer onto the screen according to preset animation parameters and animation association parameters. For the specific implementation, reference may be made to the description of this embodiment. The technical features the same as or similar to those of the previous embodiment are not repeated here. As shown in Fig. 2A, the method of this embodiment may specifically include the following steps.

S210: acquiring to-be-added elements in response to an element adding request, and adding the elements to an element queue one by one according to a preset adding order.

S220: taking out the elements from the element queue in sequence according to the preset adding order, determining target sub-elements corresponding to the taken-out elements, and writing the target sub-elements into a data layer.

S230: determining, by a rendering layer, the target sub-elements added to the data layer, and rendering the target sub-elements added to the data layer onto the screen according to preset animation parameters and animation association parameters.

The preset animation parameters may be understood as animation control parameters used to control preset animation effects presented by the target sub-elements on the screen. The animation control parameters may be used to control the movement speed, movement trail, movement time, movement position, change manner of display information, or the like of the target sub-elements. The animation association parameters may be understood as parameters associated with the animation effects presented by the target sub-elements on the screen. Exemplarily, the animation association parameters include at least one of: position information, size information, and transparency information of the target sub-elements.

Specifically, the rendering the target sub-elements onto the screen may include: determining rendering entities in the rendering layer corresponding to each of the target sub-elements, respectively, and assigning the target sub-elements to the rendering entities to render the target sub-elements onto the screen, where the rendering entities include preset rendering models and preset rendering materials corresponding to the preset rendering models.

Specifically, determining, by the rendering layer, the target sub-elements added to the data layer includes: acquiring rendered information and information for rendering by the rendering layer, and determining, based on the rendered information and the information for rendering, the target sub-elements added to the data layer. The rendered information is used to indicate the target sub-elements written into the data layer in a previous rendering, and the information for rendering is used to indicate the target sub-elements currently written into the data layer. The added target sub-elements may be understood as target sub-elements that need to be displayed on the screen.

In the embodiment of the present disclosure, the target sub-elements to be deleted and change display information in the data layer may also be determined based on the rendered information and the information for rendering. The target sub-element for changing the display information may be understood as a target sub-element that has been displayed on the screen but needs to change the display information. For the target sub-elements to be deleted, added, and change display information, ease animations may be respectively organized to write information of the target sub-elements whose flag bits in the data layer are True into the rendered information for the next judgment.

For each of the target sub-elements for changing the display information, the current animation of the target sub-element is interrupted, and animation association parameters such as the current position, size, and transparency of the target sub-element are recorded; an ease animation is created with the current animation association parameters as the start value and the set value corresponding to the target change information corresponding to the target sub-element displayed on the screen as the end value, and the ease (smooth transition) animation is played.

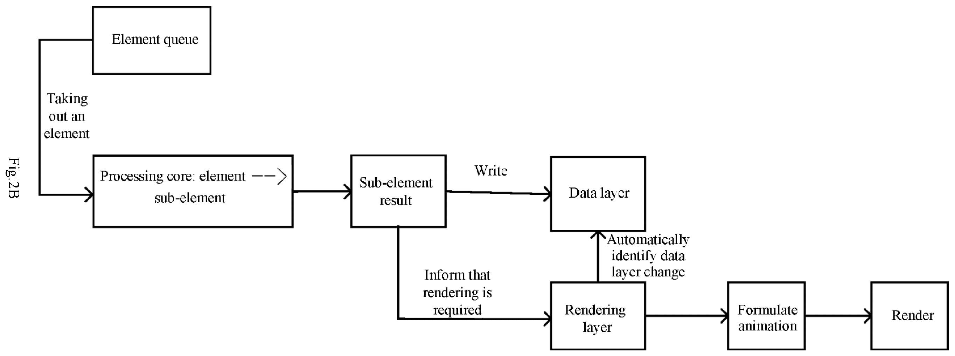

As shown in Fig. 2B, the element for processing is taken out from the element queue, and the element is passed through the element rendering core (sub-element processing core) to obtain the sub-element processing result of the element, that is, the target sub-element of the element is obtained. Furthermore, there is an unoccupied storage position in the data layer, at this time, the target sub-element is written into the data layer. And the rendering layer is notified that the rendering operation needs to be performed. At this time, the rendering layer automatically identifies the data change in the data layer, generates the ease animation corresponding to the change manner, and plays the ease animation to realize the rendering of the target sub-element on the screen.

In this optional example, the rendering layer does not actively identify the change of the data layer. When a new target sub-element is to be written into the data layer and the data layer does produce a change, the data layer will actively inform the rendering layer to perform rendering. If the data layer does not change, there is no need for the rendering layer to perform rendering. The rendering layer will not fetch new data layer information until it receives the notification information, and then differ it from the data layer information previously recorded by the rendering layer to obtain difference information, that is, identify the data change.

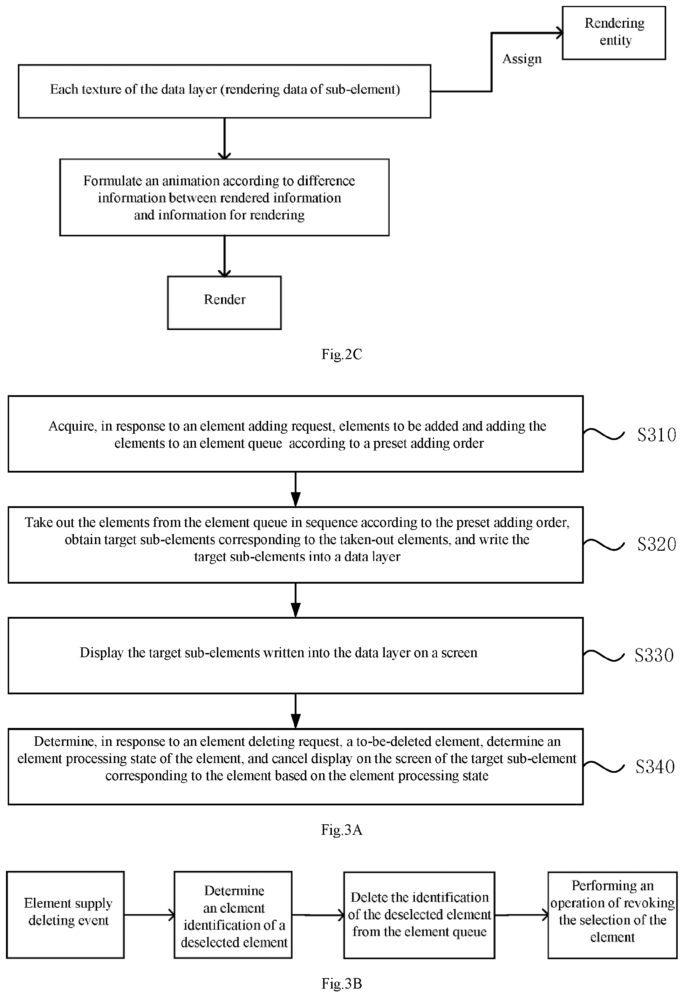

Exemplarily, as shown in Fig. 2C, the texture corresponding to each target sub-element in the data layer is assigned to the rendering entity to be drawn, and the rendering entity performs the screen rendering. By determining the difference information between the information for rendering in the current data layer and the rendered information in the previous data layer, the specific information of the latest sub-element modification (including deletion and addition) may be known. Then, an animation is woven according to the difference information, and the rendering is started. The information for rendering will maintain the writing information of the target sub-element in the data layer, and will also maintain the rendered information in the previous data layer, which is modified after each rendering and before the next modification. The state of the current data layer is recorded as a snapshot as the rendered information, and then the modification to the data layer is performed. After the rendering is completed, the rendering is ended to save performance, waiting for the next start of the element rendering core.

For each newly added target sub-element, the current animation of the target sub-element is interrupted, and animation association parameters such as the current position, size, and transparency of the target sub-element are recorded; an ease animation is created with the current animation association parameters as the start value and the first set value of the target sub-element as the end value, and the ease (smooth transition) animation is played. If there is no element in the rendered information, it means that the target sub-element in the current data layer is displayed on the screen for the first time, and the preset first rendering logic may be adopted; if the target sub-element having been displayed on the screen is recorded in the rendered information, it means that the target sub-element added to the data layer is not displayed on the screen for the first time, and the preset subsequent (not the first) rendering logic may be adopted.

In the technical solution of the embodiment of the present disclosure, the target sub-elements added to the data layer are determined by the rendering layer, the data change in the data layer may be accurately captured, and the rendering is performed when the target sub-elements change, the target sub-element corresponding to the element may be completely rendered by taking a single element as a rendering unit; then, the target sub-elements added to the data layer are rendered onto the screen according to the preset animation parameters and the animation association parameters, so that the target sub-elements may be rendered onto the screen with the effect of the preset animation parameters, thereby ensuring the display effect of the target sub-elements.

Fig. 3A is a schematic flowchart of another element processing method according to an embodiment of the present disclosure. On the basis of the above embodiments, the technical solution of this embodiment adds a description of the element deletion manner. Optionally, after displaying the target sub-elements written into the data layer on a screen, the method further includes: in response to an element deleting request, determining a to-be-deleted element, determining an element processing state of the element, and canceling display on the screen of the target sub-element corresponding to the element based on the element processing state, where the element processing state includes being present in the element queue, being in the process of determining a target sub-element, or having been displayed on the screen. For the specific implementation, reference may be made to the description of this embodiment. The technical features the same as or similar to those of the previous embodiment are not repeated here. As shown in Fig. 3A, the method of this embodiment may specifically include the following steps.

S310: acquiring to-be-added elements in response to an element adding request, and adding the elements to an element queue one by one according to a preset adding order.

S320: taking out the elements from the element queue in sequence according to the preset adding order, determining target sub-elements corresponding to the taken-out elements, and writing the target sub-elements into a data layer.

S330: displaying the target sub-elements written into the data layer on a screen.

S340: in response to an element deleting request, determining a to-be-deleted element, determining an element processing state of the element, and canceling display on the screen of the target sub-element corresponding to the element based on the element processing state.

The element deleting request may be understood as a request used to cancel the display of the target sub-element corresponding to the element on the screen. The element deleting request may be a request acting on the element generation, for example, one or more of the following requests: deleting the element, canceling the selection of the element, and other requests for terminating the display of the element on the screen. As mentioned above, there may be one or more target sub-elements corresponding to the element.

It should be noted that, for the to-be-deleted element, all the corresponding target sub-elements thereof will be canceled to be displayed on the screen. For example, the target sub-elements having been displayed on the screen are sub-element 1, sub-element 2, sub-element 3, sub-element 4, sub-element 5, and sub-element 6, respectively. The sub-element 1 corresponds to the element A, the sub-element 2 and the sub-element 3 correspond to the element B, and the sub-element 4, the sub-element 5, and the sub-element 6 correspond to the element C. After receiving the deletion operation on the element B, the display of the sub-element 2 and the sub-element 3 on the screen will be canceled, that is, the sub-element 2 and the sub-element 3 will disappear from the screen.

Since the target sub-elements of which the display is requested to be canceled are all stored in the data layer, specifically, the element deleting request may carry the element identification of the to-be-deleted element. The target sub-element corresponding to the element may be determined through the element identification, and then the display of the target sub-element on the screen may be canceled.

In the embodiment of the present disclosure, for elements in different element processing states, the execution manners of the deletion operation are also different. According to the execution logic of the element processing method, exemplarily, the element processing state may include one or more of the following states: being present in the element queue, being in the process of determining a target sub-element, and having been displayed on the screen.

After the element deleting request is received, the to-be-deleted element may be determined based on the element deleting request, and the element processing state of this element may be detected to determine the subsequent deletion logic of the element. Exemplarily, canceling the display on the screen of the target sub-element corresponding to the element based on the element processing state includes at least one of the following operations: in a case where the element processing state is being in the process of determining a target sub-element, interrupting the operation of determining one or more target sub-elements corresponding to the taken-out element; in a case where the element processing state is being present in the element queue, deleting an element identification of the element from the element queue; and in a case where the element processing state is having been displayed on the screen, deleting the target sub-element corresponding to the element from the data layer, and controlling, by the rendering layer, the target sub-element to cancel the display on the screen according to a preset disappearance animation and an animation association parameter.

As shown in Fig. 3B, when an element supply side detects a deleting event, for example, cancels the selection of an element to cancel the display of the element on the screen, at this time, the element identification of the element of which the selection is canceled is determined, and in the case where the element processing state is be present in the element queue, the element identification of the element is deleted from the element queue. Furthermore, the operation of undoing the selection of the element may also be performed to cancel the selection of this element.

Still using the previous example, if the sub-element corresponding to the element has been displayed on the screen, each element in the data layer may be traversed, the bit whose key is the element identification of the to-be-deleted element and the flag bit is True is found, and it is sequentially removed from the data layer and added to the end of the data layer, and at the same time, the flag bit is set to False. For each element in the data layer, whether the current element is in the state of being displayed on the screen is marked by the flag bit variable. It may be understood that the flag bit being True represents that this data bit is currently being rendered on the screen and cannot be overwritten; the flag bit being False represents that this data slot may be overwritten and is free space.

In the embodiment of the present disclosure, the target sub-element is controlled by the rendering layer to cancel the display on the screen according to the preset disappearance animation and the animation association parameter, which may realize that the target sub-element of the deleted element is controlled to disappear from the screen in a smooth transition manner.

Optionally, in the case where the element processing state is having been displayed on the screen, before controlling the target sub-element to cancel the display on the screen according to the preset disappearance animation, the method further includes: if there is another element that is in the process of determining a target sub-element, interrupting the operation of determining one or more target sub-elements corresponding to the taken-out element, and re-adding an element identification of the element that is in the process of determining the target sub-element to a head position in the element queue. It should be noted that the head position of the element queue may be understood as the position in the element queue that is taken out and processed first.

As mentioned above, in order to save performance, the maximum number of target sub-elements rendered on the full screen is limited, and it is necessary to wait for the disappearing target sub-element to completely end the disappearance animation before it can be regarded as a free and available storage position. Therefore, in the case where the element processing state is being in the process of determining a target sub-element, the operation of determining one or more target sub-elements corresponding to the taken-out element is interrupted. If the operation of determining one or more target sub-elements corresponding to the taken-out element continues to be performed at this time, new target sub-elements will need to be rendered on the screen, and the opportunity of displaying on the screen will be missed due to an incorrect judgment that there is no new storage position (actually there is, but it is disappearing) , or new rendering entities will have to be allocated. While the animation of the disappearing sub-element is being performed, the new target sub-element displayed on the screen is played synchronously, which leads to a waste of performance, and at the same time, more target sub-elements than the maximum number of sub-elements (some are disappearing) may appear on the picture, thereby affecting the display effect of the target sub-elements on the screen.

For each of the deleted target sub-elements, the current animation of the target sub-element is interrupted, and animation association parameters such as the current position, size, and transparency of the target sub-element are recorded; an ease animation is created with the current animation association parameters as the start value and the second set value of the target sub-element as the end value, and the ease (smooth transition) animation is played.

In the technical solution of the embodiment of the present disclosure, the to-be-deleted element is determined in response to the element deleting request, the deleted element may be customized, and the element processing state of the element is determined, the display of the target sub-element corresponding to the element on the screen is canceled based on the element processing state, the processing progress of the element may be accurately determined, so as to adopt an appropriate deletion logic to delete the target sub-element, and cancel the display of the target sub-element on the screen. The adjustment of the display of the target sub-element on the screen may be realized by operating the element, which makes the element processing more flexible, realizes the linkage between the element and the target sub-element, enriches the interaction manners of element processing, and improves the interaction experience of element processing.

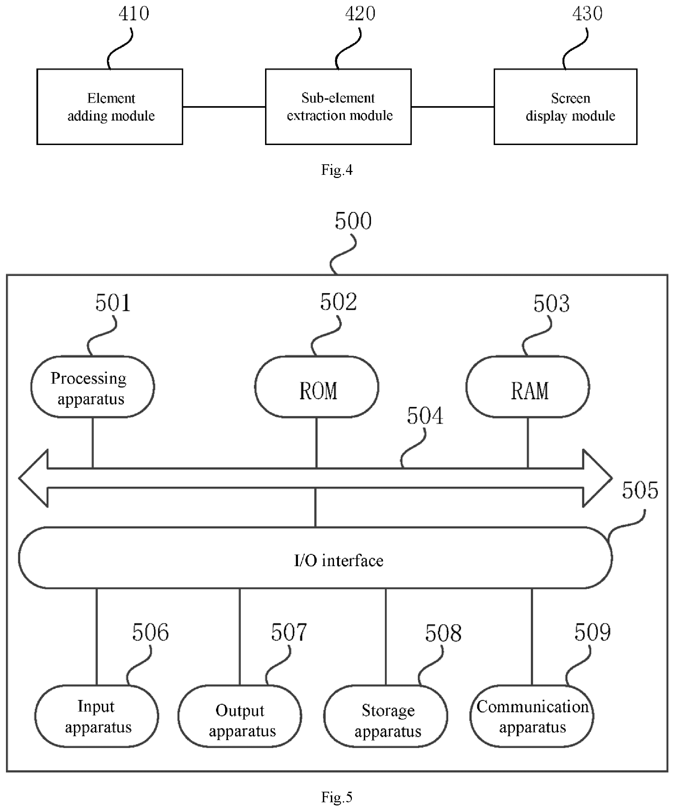

Fig. 4 is a schematic structural diagram of an element processing apparatus according to an embodiment of the present disclosure. As shown in Fig. 4, the element processing apparatus may specifically include: an element adding module 410, a sub-element extraction module 420, and a screen display module 430. The element adding module 410 is configured to acquire to-be-added elements in response to an element adding request, and add the elements to an element queue one by one according to a preset adding order; the sub-element extraction module 420 is configured to take out the elements from the element queue in sequence according to the preset adding order, determine target sub-elements corresponding to the taken-out elements, and write the target sub-elements into a data layer; and the screen display module 430 is configured to display the target sub-elements written into the data layer on a screen.

In the technical solution of the embodiment of the present disclosure, first, the element adding module acquires the to-be-added elements in response to the element adding request, which supports the custom addition of elements, thereby realizing the dynamic processing of the elements; then, the sub-element extraction module adds the elements to the element queue one by one according to the preset adding order, and then takes out the elements from the element queue in sequence according to the preset adding order, that is, the to-be-added elements may be processed according to the preset adding order through the element queue, to sequentially obtain the target sub-elements corresponding to the elements; finally, the screen display module writes the target sub-elements into the data layer, and then displays the target sub-elements written into the data layer on the screen, which effectively solves the technical problems of the limited display space and time and the monotonous display mode of elements in the related art, and may effectively ensure the data stability of the target sub-elements, thereby ensuring the display effect of the target sub-elements on the screen.

On the basis of the above optional technical solutions, optionally, the screen display module 430 is further configured to: determine, by a rendering layer, the target sub-elements added to the data layer, and render the target sub-elements added to the data layer onto the screen according to preset animation parameters and animation association parameters.

On the basis of any optional technical solution of the embodiments of the present disclosure, optionally, the screen display module 430 is further configured to: acquire rendered information and information for rendering by the rendering layer, and determine, based on the rendered information and the information for rendering, the target sub-elements added to the data layer, where the rendered information is used to indicate the target sub-elements written into the data layer in a previous rendering, and the information for rendering is used to indicate the target sub-elements currently written into the data layer.

On the basis of any optional technical solution of the embodiments of the present disclosure, optionally, the data layer includes a preset number of storage positions. Correspondingly, the sub-element extraction module 420 may be further configured to: in a case where there are unoccupied storage positions in the data layer, take out the element for processing from the element queue according to the preset adding order.

On the basis of any optional technical solution of the embodiments of the present disclosure, optionally, the sub-element extraction module 420 is further configured to write the target sub-elements into the storage positions one by one based on a flag bit corresponding to each of the target sub-elements, where each target sub-element is written into one storage position.

On the basis of any optional technical solution of the embodiments of the present disclosure, optionally, the sub-element extraction module 420 includes: an element scaling processing unit, a sub-element screening unit, and a sub-element extraction unit. The element scaling processing unit is configured to scale the taken-out element proportionally to a preset size according to a preset proportion, and extract an initial sub-element in the scaled element; the target sub-element screening unit is configured to, in a case where the initial sub-element satisfies a preset filtering condition, take the initial sub-element as a sub-element for extraction; and the target sub-element extraction unit is configured to acquire a projection transformation matrix used when extracting the sub-element, and extract the target sub-element from the element by using the projection transformation matrix.

On the basis of any optional technical solution of the embodiments of the present disclosure, optionally, the element adding module 410 includes: an element state determining unit and an element enqueue unit. The element state determining unit is configured to, for each of the elements, determine an element processing state corresponding to the element, and determine, based on the element processing state, elements to be added to the element queue, the element processing state including being present in the element queue, being in the process of determining a target sub-element, or having been displayed on the screen; the element enqueue unit is configured to add the elements to the element queue one by one according to the preset adding order.

On the basis of any optional technical solution of the embodiments of the present disclosure, optionally, the element processing apparatus further includes: an element deleting module. The element deleting module is configured to, after displaying the target sub-elements written into the data layer on a screen, in response to an element deleting request, determine a to-be-deleted element, determine an element processing state of the element, and cancel display on the screen of the target sub-element corresponding to the element based on the element processing state, where the element processing state includes being present in the element queue, being in the process of determining a target sub-element, or having been displayed on the screen.

On the basis of any optional technical solution of the embodiments of the present disclosure, optionally, the element deleting module is configured to perform at least one of the following operations: in a case where the element processing state is being in the process of determining a target sub-element, interrupting the operation of determining one or more target sub-elements corresponding to the taken-out element; in a case where the element processing state is be present in the element queue, deleting an element identification of the element from the element queue; and in a case where the element processing state is having been displayed on the screen, deleting the target sub-element corresponding to the element from the data layer, and controlling, by the rendering layer, the target sub-element to cancel the display on the screen according to a preset disappearance animation and an animation association parameter.

On the basis of any optional technical solution of the embodiments of the present disclosure, optionally, the element processing apparatus further includes: an element reprocessing module. The element reprocessing module is configured to, in the case where the element processing state is having been displayed on the screen, before controlling the target sub-element to cancel the display on the screen according to the preset disappearance animation, if there is another element that is in the process of determining a target sub-element, interrupt the operation of determining one or more target sub-elements corresponding to the taken-out element, and re-add an element identification of the element that is in the process of determining the target sub-element to a head position in the element queue.

On the basis of any optional technical solution of the embodiments of the present disclosure, optionally, the element processing apparatus further includes: a display updating module. The display updating module is configured to, after writing the target sub-elements into the data layer or deleting the target sub-element corresponding to the element from the data layer, update display information of the target sub-elements having been displayed on the screen in a preset manner.

On the basis of any optional technical solution of the embodiments of the present disclosure, optionally, the element processing apparatus further includes: a rendering sequence updating module. The rendering sequence updating module is configured to, after writing the target sub-elements into the data layer, in a case where there are multiple target sub-elements, update a rendering sequence corresponding to the target sub-elements according to a writing sequence of the target sub-elements in the data layer.

The element processing apparatus provided by the embodiment of the present disclosure may execute the element processing method provided by any embodiment of the present disclosure, and has corresponding functional modules and beneficial effects for executing the element processing method.

It is worth noting that the units and modules included in the above apparatus are only divided according to functional logic, but are not limited to the above division, as long as the corresponding functions may be realized; in addition, the specific names of the functional units are only for the convenience of distinguishing from each other, and are not used to limit the protection scope of the embodiments of the present disclosure.

Fig. 5 is a schematic structural diagram of an electronic device according to an embodiment of the present disclosure. Reference is made to Fig. 5 below, which illustrates a schematic structural diagram of an electronic device (such as a terminal device or a server in Fig. 5) 500 suitable for implementing the embodiments of the present disclosure. The terminal device in the embodiments of the present disclosure may include, but are not limited to, mobile terminals such as a mobile phone, a notebook computer, a digital broadcast receiver, a PDA (personal digital assistant) , a PAD (tablet computer) , a PMP (portable multimedia player) , an in-vehicle terminal (such as an in-vehicle navigation terminal) , etc., and stationary terminals such as a digital TV, a desktop computer, etc. The electronic device shown in Fig. 5 is only an example, and should not bring any limitation to the functions and the range of use of the embodiments of the present disclosure.

As shown in Fig. 5, the electronic device 500 may include a processing apparatus (such as a central processing unit, a graphics processor, etc.) 501, which may perform various appropriate actions and processing according to a program stored in a Read-Only Memory (ROM) 502 or a program loaded from a storage apparatus 508 into a Random Access Memory (RAM) 503. In the RAM 503, various programs and data required for operations of the electronic device 500 are also stored. The processing apparatus 501, the ROM 502, and the RAM 503 are connected to each other through a bus 504. An Editing/Outputting (I/O) interface 505 is also connected to the bus 504.

Usually, the following apparatuses may be connected to the I/O interface 505: an input apparatus 506 including, for example, a touch screen, a touchpad, a keyboard, a mouse, a camera, a microphone, an accelerometer, a gyroscope, etc.; an output apparatus 507 including, for example, a Liquid Crystal Display (LCD) , a speaker, a vibrator, etc.; the storage apparatus 508 including, for example, a magnetic tape, a hard disk, etc.; and a communication apparatus 509. The communication apparatus 509 may allow the electronic device 500 to perform wireless or wired communication with other devices to exchange data. Although Fig. 5 shows the electronic device 500 with various apparatuses, it should be understood that it is not required to implement or have all the apparatuses shown. Alternatively, more or fewer apparatuses may be implemented or provided.

In particular, according to an embodiment of the present disclosure, the process described above with reference to the flowchart may be implemented as a computer software program. For example, the embodiment of the present disclosure includes a computer program product, which includes a computer program carried on a non-transitory computer-readable medium, and the computer program contains program codes for performing the method shown in the flowchart. In such an embodiment, the computer program may be downloaded and installed from a network through the communication apparatus 509, or installed from the storage apparatus 508, or installed from the ROM 502. When the computer program is executed by the processing apparatus 501, the above-mentioned functions defined in the method of the embodiment of the present disclosure are executed.

The names of messages or information exchanged between multiple apparatuses in the implementations of the present disclosure are only used for illustrative purposes, and are not used to limit the scope of these messages or information.

The electronic device provided by the embodiment of the present disclosure belongs to the same inventive concept as the element processing method provided by the above embodiment, and for the technical details not described in detail in this embodiment, reference may be made to the above embodiment, and this embodiment has the same beneficial effects as the above embodiment.

An embodiment of the present disclosure provides a computer storage medium, on which a computer program is stored, and when the program is executed by a processor, the element processing method provided by the above embodiments is implemented.

It should be noted that the above computer-readable medium in the present disclosure may be a computer-readable signal medium, a computer-readable storage medium, or any combination of the two. The computer-readable storage medium may be, for example, but not limited to, an electronic, magnetic, optical, electromagnetic, infrared, or semiconductor system, apparatus, or device, or any combination of the above. More specific examples of the computer-readable storage medium may include, but are not limited to: an electrical connection having one or more wires, a portable computer magnetic disk, a hard disk, a Random Access Memory (RAM) , a Read-Only Memory (ROM) , an Erasable Programmable Read-Only Memory (EPROM or flash memory) , an optical fiber, a portable compact disk read-only memory (CD-ROM) , an optical storage device, a magnetic storage device, or any suitable combination of the above. In the present disclosure, a computer-readable storage medium may be any tangible medium that contains or stores a program, which may be used by or in combination with an instruction execution system, apparatus, or device. In the present disclosure, a computer-readable signal medium may include a data signal propagated in a baseband or as a part of a carrier, and computer-readable program codes are carried therein. This propagated data signal may take many forms, including but not limited to, an electromagnetic signal, an optical signal, or any suitable combination of the above. The computer-readable signal medium may also be any computer-readable medium other than the computer-readable storage medium, and the computer-readable signal medium may send, propagate, or transmit the program used by or in combination with the instruction execution system, apparatus, or device. The program codes contained on the computer-readable medium may be transmitted by any suitable medium, including but not limited to: a wire, an optical cable, a Radio Frequency (RF) , etc., or any suitable combination of the above.

In some implementations, clients and servers may communicate using any currently known or future developed network protocol, such as the HyperText Transfer Protocol (HTTP), and may be interconnected with any form or medium of digital data communication (for example, a communication network) . Examples of communication networks include a local area network ("LAN") , a wide area network ("WAN") , an internet (for example, the Internet) , and a peer-to-peer network (for example, an Ad-Hoc network) , as well as any network currently known or to be developed in the future.

The above computer-readable medium may be included in the above electronic device; or it may exist alone without being assembled into the electronic device.

The above computer-readable medium carries one or more programs, and when the one or more programs are executed by the electronic device, the electronic device: acquires to-be-added elements in response to an element adding request, and adds the elements to an element queue one by one according to a preset adding order; takes out the elements from the element queue in sequence according to the preset adding order, determines target sub-elements corresponding to the taken-out elements, and writes the target sub-elements into a data layer; and displays the target sub-elements written into the data layer on a screen.

The computer program codes for performing the operations of the present disclosure may be written in one or more programming languages or a combination thereof, the above programming languages include but are not limited to object-oriented programming languages such as Java, Smalltalk, C++, and also include conventional procedural programming languages such as "C" language or similar programming languages. The program codes may be executed entirely on a user's computer, partially executed on a user's computer, executed as an independent software package, partially executed on a user's computer and partially executed on a remote computer, or entirely executed on a remote computer or a server. In the case of involving a remote computer, the remote computer may be connected to a user's computer through any kind of network, including a Local Area Network (LAN) or a Wide Area Network (WAN) , or it may be connected to an external computer (for example, connected by using Internet provided by an Internet service provider) .

The flowcharts and block diagrams in the drawings illustrate the possibly implemented architectures, functions, and operations of the system, the method, and the computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the drawings. For example, two blocks shown in succession may actually be performed substantially in parallel, or they may sometimes be performed in the reverse order, depending on the functions involved. It should also be noted that each block in the block diagram and/or the flowchart, and the combination of the blocks in the block diagram and/or the flowchart may be implemented by a dedicated hardware-based system that executes specified functions or operations, or may be implemented by a combination of dedicated hardware and computer instructions.

The involved units described in the embodiments of the present disclosure may be implemented by software or by hardware. The name of a unit does not constitute a limitation on the unit itself under certain circumstances, for example, the first acquiring unit may also be described as "a unit for acquiring at least two internet protocol addresses".

The functions described above may be at least partially performed by one or more hardware logic components. For example, without limitation, exemplary types of hardware logic components that may be used include: a Field Programmable Gate Array (FPGA) , an Application Specific Integrated Circuit (ASIC) , an Application Specific Standard Product (ASSP) , a System On Chip (SOC) , a Complex Programmable Logical Device (CPLD) , etc.

In the context of the present disclosure, a machine-readable medium may be a tangible medium that may contain or store programs for use by or in combination with an instruction execution system, apparatus, or device. The machine-readable medium may be a machine-readable signal medium or a machine-readable storage medium. The machine-readable medium may include, but are not limited to, an electronic, magnetic, optical, electromagnetic, infrared, or semi-conductive system, apparatus or device, or any suitable combination of the above. More specific examples of the machine-readable storage medium may include an electrical connection based on one or more wires, a portable computer magnetic disk, a hard disk, a Random Access Memory (RAM) , a Read-Only Memory (ROM) , an Erasable Programmable Read-Only Memory (EPROM or flash memory) , an optical fiber, a portable compact disk read-only memory (CD-ROM) , an optical storage device, a magnetic storage device, or any suitable combination of the above.

According to one or more embodiments of the present disclosure, [Example 1] provides an element processing method, including: acquiring to-be-added elements in response to an element adding request, and adding the elements to an element queue one by one according to a preset adding order; taking out the elements from the element queue in sequence according to the preset adding order, determining target sub-elements corresponding to the taken-out elements, and writing the target sub-elements into a data layer; and displaying the target sub-elements written into the data layer on a screen.

According to one or more embodiments of the present disclosure, [Example 2] provides the method of Example 1, and further includes: optionally, the displaying on a screen the target sub-elements written into the data layer includes: determining, by a rendering layer, the target sub-elements added into the data layer, and rendering the target sub-elements added into the data layer onto the screen according to preset animation parameters and animation association parameters.

According to one or more embodiments of the present disclosure, [Example 3] provides the method of Example 2, and further includes: optionally, the determining, by a rendering layer, the target sub-elements added to the data layer includes: acquiring rendered information and information for rendering by the rendering layer, where the rendered information is used to indicate the target sub-elements written into the data layer in a previous rendering, and the information for rendering is used to indicate the target sub-elements currently written into the data layer; and determining, based on the rendered information and the information for rendering, the target sub-elements added to the data layer.

According to one or more embodiments of the present disclosure, [Example 4] provides the method of Example 1, and further includes: optionally, the data layer includes a preset number of storage positions; and the taking out the elements from the element queue in sequence according to the preset adding order includes: in a case where there are unoccupied storage positions in the data layer, taking out the element for processing from the element queue according to the preset adding order.

According to one or more embodiments of the present disclosure, [Example 5] provides the method of Example 4, and further includes: optionally, the writing the target sub-elements into the data layer includes: writing the target sub-elements into the storage positions one by one based on a flag bit corresponding to each of the target sub-elements, where each target sub-element is written into one storage position.

According to one or more embodiments of the present disclosure, [Example 6] provides the method of Example 1, and further includes: optionally, the determining the target sub-element corresponding to the taken-out element includes: scaling the taken-out element proportionally to a preset size according to a preset proportion, and extracting an initial sub-element in the scaled element; in a case where the initial sub-element satisfies a preset filtering condition, taking the initial sub-element as a sub-element for extraction; and acquiring a projection transformation matrix used when extracting the sub-element, and extracting the target sub-element from the element by using the projection transformation matrix.

According to one or more embodiments of the present disclosure, [Example 7] provides the method of Example 1, and further includes: optionally, the adding the elements to the element queue one by one according to the preset adding order includes: for each of the elements, determining an element processing state corresponding to the element, and determining, based on the element processing state, elements to be added to the element queue, where the element processing state includes being present in the element queue, being in the process of determining a target sub-element, or having been displayed on the screen; and adding the elements to the element queue one by one according to the preset adding order.

According to one or more embodiments of the present disclosure, [Example 8] provides the method of Example 1, and further includes: optionally, after displaying the target sub-elements written into the data layer on a screen, the method further includes: in response to an element deleting request, determining a to-be-deleted element, determining an element processing state of the element, and canceling display on the screen of the target sub-element corresponding to the element based on the element processing state, where the element processing state includes being present in the element queue, being in the process of determining a target sub-element, or having been displayed on the screen.

According to one or more embodiments of the present disclosure, [Example 9] provides the method of Example 8, and further includes: optionally, the canceling the display on the screen of the target sub-element corresponding to the element based on the element processing state includes at least one of the following operations: in a case where the element processing state is being in the process of determining a target sub-element, interrupting the operation of determining one or more target sub-elements corresponding to the taken-out element; in a case where the element processing state is being present in the element queue, deleting an element identification of the element from the element queue; and in a case where the element processing state is having been displayed on the screen, deleting the target sub-element corresponding to the element from the data layer, and controlling, by the rendering layer, the target sub-element to cancel the display on the screen according to a preset disappearance animation and an animation association parameter.

According to one or more embodiments of the present disclosure, [Example 10] provides the method of Example 9, and further includes: optionally, in the case where the element processing state is having been displayed on the screen, before controlling the target sub-element to cancel the display on the screen according to the preset disappearance animation, the method further includes: if there is another element that is in the process of determining a target sub-element, interrupting the operation of determining one or more target sub-elements corresponding to the taken-out element, and re-adding an element identification of the element that is in the process of determining the target sub-element to a head position in the element queue.

According to one or more embodiments of the present disclosure, [Example 11] provides the method of Example 1 or Example 9, and further includes: optionally, after writing the target sub-elements into the data layer or deleting the target sub-element corresponding to the element from the data layer, the method further includes: updating display information of the target sub-elements having been displayed on the screen in a preset manner.

According to one or more embodiments of the present disclosure, [Example 12] provides the method of Example 1, and further includes: optionally, after writing the target sub-elements into the data layer, the method further includes: in a case where there are multiple target sub-elements, updating a rendering sequence corresponding to the target sub-elements according to a writing sequence of the target sub-elements in the data layer.

According to one or more embodiments of the present disclosure, [Example 13] provides an element processing apparatus, including: an element adding module, configured to acquire to-be-added elements in response to an element adding request, and add the elements to an element queue one by one according to a preset adding order; a sub-element extraction module, configured to take out the elements from the element queue in sequence according to the preset adding order, determine target sub-elements corresponding to the taken-out elements, and write the target sub-elements into a data layer; and a screen display module, configured to display the target sub-elements written into the data layer on a screen.

The above description is only preferred embodiments of the present disclosure and an explanation of the applied technical principles. Those skilled in the art should understand that the scope of disclosure involved in the present disclosure is not limited to the technical solutions formed by the specific combination of the above technical features, and should also cover other technical solutions formed by any combination of the above technical features or their equivalent features without departing from the above disclosure concept. For example, the above features and the technical features provided in the present disclosure (but not limited to) with similar functions may be replaced each other to form a technical solution.

In addition, although the operations are depicted in a specific order, this should not be understood as requiring the operations to be performed in the specific order shown or in a sequential order. Under certain circumstances, multitasking and parallel processing may be beneficial. Similarly, although several specific implementation details are included in the above discussion, these should not be interpreted as limiting the scope of the present disclosure. Certain features described in the context of separate embodiments may also be implemented in a single embodiment in combination. On the contrary, various features described in the context of a single embodiment may also be implemented in multiple embodiments individually or in any suitable sub-combination.

Although the present subject matter has been described in a language specific to structural features and/or logical actions of the method, it should be understood that the subject matter defined in the appended claims is not necessarily limited to the specific features or actions described above. On the contrary, the specific features and actions described above are only exemplary forms of implementing the claims.

## Claims

1. An element processing method, comprising:
acquiring, in response to an element adding request, elements to be added and adding the elements to an element queue one by one according to a preset adding order;
taking out the elements from the element queue in sequence according to the preset adding order, determining target sub-elements corresponding to the taken-out elements, and writing the target sub-elements into a data layer; and
displaying the target sub-elements written into the data layer on a screen.

2. The element processing method of claim 1, wherein displaying the target sub-elements written into the data layer on a screen comprises:
determining, through a rendering layer, the target sub-elements added to the data layer, and rendering the target sub-elements added to the data layer onto the screen according to preset animation parameters and animation association parameters.

3. The element processing method of claim 2, wherein determining, by the rendering layer, the target sub-elements added to the data layer comprises:
acquiring, by the rendering layer, rendered information and information for rendering, wherein the rendered information is used to indicate the target sub-elements written into the data layer in a previous rendering, and the information for rendering is used to indicate the target sub-elements currently written into the data layer; and
determining, based on the rendered information and the information for rendering, the target sub-elements added to the data layer.

4. The element processing method of claim 1, wherein the data layer comprises a preset number of storage positions; and the taking out the elements from the element queue in sequence according to the preset adding order comprises:
in a case that an unoccupied storage position exists in the data layer, taking out an element for processing from the element queue according to the preset adding order.

5. The element processing method of claim 4, wherein writing the target sub-elements into the data layer comprises:
writing the target sub-elements into the storage positions one by one based on a flag bit corresponding to each of the target sub-elements, wherein each target sub-element is written into one storage position.

6. The element processing method of claim 1, wherein determining the target sub-element corresponding to the taken-out element comprises:
scaling the taken-out element proportionally to a preset size according to a preset proportion, and extracting an initial sub-element in the scaled element;
in a case that the initial sub-element satisfies a preset filtering condition, determining the initial sub-element as a sub-element for extraction; and
acquiring a projection transformation matrix used when extracting the sub-element, and extracting the target sub-element from the element by using the projection transformation matrix.

7. The element processing method of claim 1, wherein adding the elements to the element queue one by one according to the preset adding order comprises:
for each of the elements, determining an element processing state corresponding to the element, and determining, based on the element processing state, elements to be added to the element queue, wherein the element processing state comprises being present in the element queue, being in the process of determining a target sub-element, or having been displayed on the screen; and
adding the elements to the element queue one by one according to the preset adding order.

8. The element processing method of claim 1, wherein the method further comprises, after displaying the target sub-elements written into the data layer on a screen:
in response to an element deleting request, determining a to-be-deleted element, determining an element processing state of the element, and canceling display on the screen of the target sub-element corresponding to the element based on the element processing state, wherein the element processing state comprises being present in the element queue, being in the process of determining a target sub-element, or having been displayed on the screen.

9. The element processing method of claim 8, wherein canceling the display on the screen of the target sub-element corresponding to the element based on the element processing state comprises at least one of the following operations:
in a case that the element processing state is being in the process of determining a target sub-element, interrupting the operation of determining one or more target sub-elements corresponding to the taken-out element;
in a case that the element processing state is being present in the element queue, deleting an element identification of the element from the element queue; and
in a case that the element processing state is having been displayed on the screen, deleting the target sub-element corresponding to the element from the data layer, and controlling, by the rendering layer, the target sub-element to cancel the display on the screen according to a preset disappearance animation and an animation association parameter.

10. The element processing method of claim 9, wherein in the case that the element processing state is having been displayed on the screen, the method further comprises, before controlling the target sub-element to cancel the display on the screen according to the preset disappearance animation:
in a case that there is another element in the process of determining a target sub-element, interrupting the operation of determining one or more target sub-elements corresponding to the taken-out element, and re-adding an element identification of the element in the process of determining the target sub-element to a head position in the element queue.

11. The element processing method of claim 1 or 9, wherein the method further comprises, after writing the target sub-elements into the data layer or deleting the target sub-element corresponding to the element from the data layer:
updating display information of the target sub-elements having been displayed on the screen in a preset manner.

12. The element processing method of claim 1, wherein the method further comprises, after writing the target sub-elements into the data layer:
in a case that there are multiple target sub-elements, updating a rendering sequence corresponding to the target sub-elements according to a writing sequence of the target sub-elements in the data layer.

13. An element processing apparatus, comprising:
an element adding module configured to, acquire, in response to an element adding request, elements to be added and adding the elements to an element queue one by one according to a preset adding order;
a sub-element extraction module configured to take out the elements from the element queue in sequence according to the preset adding order, determine target sub-elements corresponding to the taken-out elements, and write the target sub-elements into a data layer; and
a screen display module configured to display the target sub-elements written into the data layer on a screen.

14. An electronic device, comprising:
one or more processors; and
a storage apparatus configured to store one or more programs,
when the one or more programs are executed by the one or more processors, the one or more processors are caused to implement the element processing method of any of claims 1 to 12.

15. A storage medium comprising computer-executable instructions which, when executed by a computer processor, perform the element processing method of any of claims 1 to 12.
